# FASCICULE DE BREVET EUROPEEN

(11) **EP 0 434 565 B1**
(45) Date de publication et mention de la délivrance du brevet: **10.11.1993**
(21) Numéro de dépôt: 90403705.8
(22) Date de dépôt: 20.12.1990
(51) Int. Cl.: F02K 9/78, F02K 7/16, F02K 7/18, F02K 9/97, F02K 9/82

(54) **Moteur à propulsion combinée à haute adaptabilité pour aéronef ou avion spatial**
Anpassungsfähiges Kombinationsstrahltriebwerk für Luft- oder Raumfahrzeug
Versatile combined propulsion engine for aeroplane or space shuttle

(30) Priorité: 21.12.1989 FR 8917007
(43) Date de publication de la demande: 26.06.1991
(73) Titulaire: SOCIETE EUROPEENNE DE PROPULSION, 92150 Suresnes (FR)
(72) Inventeur: Ciais, Jean-Pierre, F-33290 Blanquefort (FR); Hermant, Eric François, F-27200 Vernon (FR)
(74) Mandataire: Thévenet, Jean-Bruno

(56) Documents cités:
- EP-A- 0 313 194
- FR-A- 1 508 093
- FR-A- 1 586 188
- FR-A- 2 568 316
- GB-A- 1 026 068
- GB-A- 2 196 392
- GB-A- 2 205 360
- US-A- 3 049 876
- US-A- 3 138 921
- US-A- 3 192 712
- US-A- 4 461 145
- ASTRONAUTICS AND AERONAUTICS. vol. 13, no. 6, juin 1975, NEW YORK US pages 22 -27; R.Beichel: "Nozzle concepts"

## Description

La présente invention a pour objet un moteur à propulsion combinée à haute adaptabilité pour aéronef ou avion spatial, comprenant un moteur à réaction pour fonctionner dans l'atmosphère de façon aérobie et un moteur-fusée à propergols liquides ou gazeux pour fonctionner dans l'espace de façon anaérobie, le moteur à réaction comprenant un dispositif d'entrée d'air et une tuyère externe définissant avec un corps central une chambre de combustion aérobie parcourue par une veine aérobie de gaz en combustion, et le moteur-fusée comprenant une chambre de combustion annulaire anaérobie et au moins une turbo-pompe d'alimentation en propergol.

D'une manière générale, un moteur à propulsion combinée, encore appelé plus simplement moteur combiné, est constitué par un système de propulsion associant simultanément ou successivement un moteur aérobie à un moteur-fusée dans le cadre d'un même engin propulsé. Dans un moteur combiné, l'oxygène de l'air est ainsi utilisé comme comburant au sein d'un moteur à réaction aérobie pendant une partie du vol tandis que pendant une autre partie du vol, on utilise un autre comburant embarqué au sein d'un moteur-fusée. Le moteur-fusée peut fonctionner seul ou, pendant une partie du vol de façon simultanée avec le moteur à réaction aérobie.

Des moteurs combinés ont déjà été réalisés pour la propulsion de missiles. Dans ce cas, un moteur à combustible solide assure le lancement et l'accélération du missile. Ce moteur se transforme ensuite en stato-réacteur, en utilisant alors l'oxygène de l'air, pous assurer le vol de croisière.

On a par ailleurs déjà envisagé la mise en oeuvre de moteurs combinés pour des avions de transport supersoniques, des navettes ou autres véhicules spatiaux, en vue de réduire la masse d'oxydant embarqué sans qu'aucun projet n'ait encore été effectivement réalisé.

Pour cette application à des aéronefs ou véhicules spatiaux, d'une manière générale, l'air est utilisé sous sa forme gazeuse. Il est comprimé dans un compresseur analogue à celui d'un turbo-réacteur et alimente une chambre de combustion dans laquelle est brûlé le combustible. Les gaz chauds sont ensuite éjectés à travers une tuyère.

Au delà d'une certaine vitesse, et moyennant une adaptation de la géométrie de la veine d'air, le moteur fonctionne en stato-réacteur (compresseur en "roue libre"). Pour le fonctionnement anaérobie, le moteur comporte une chambre de combustion du type de celle d'un moteur-fusée et des pompes et accessoires divers pour l'alimenter en combustible et comburant. Cette chambre est située à l'intérieur de la veine d'air du turbo-stato et derrière la partie compresseur-turbine. La tuyère de cette chambre de combustion utilise des éléments en commun avec la tuyère de la veine aérobie.

L'inconvénient de ce dispositif réside dans le fait qu'en fonctionnement mode turbo-réacteur ou mode stato-réacteur, cette chambre de combustion doit être obturée à l'aide d'un capotage profilé, afin de ne pas perturber l'écoulement dans la veine anaérobie. En outre, si le capotage est éjecté pour le fonctionnement en mode fusée, il n'y a pas de retour possible au mode turbo ou stato sans une importante opération de maintenance impliquant notamment le remontage d'un capotage neuf. Enfin, la nécessité d'adapter la section au col de la tuyère aérobie exige de celle-ci une grande course par rapport au corps central qui joue le rôle du pointeau.

On a par ailleurs proposé, dans le document JP-A-52-56209, de réaliser un système propulseur de fusée aérobie à propergols liquides qui comprend au moins une chambre fusée annulaire, à pointe émergente, et placée en amont de la veine de combustion d'un stato-réacteur, donc en amont du col de la tuyère du stato-réacteur, de façon à réaliser un fonctionnement mixte dans lequel il se produit un effet d'entraînement de l'air capté à l'extérieur et un mélange de cet air avec les gaz initialement supersoniques de la tuyère fusée associée à la chambre fusée. La pression d'éjection de la tuyère fusée est ainsi rendue voisine de celle de l'air dans la zone du mélange et la géométrie de la tuyère fusée permet à la veine d'air et à celle des gaz éjectés par la fusée de cheminer en parallèle en se mélangeant progressivement avec un minimum de pertes. Dans ce mode de réalisation, le corps central effilé, de type "Spike" délimitant la chambre fusée annulaire se termine dans une zone d'écoulement sub-sonique, en amont du col de la tuyère du stato-réacteur. Seuls deux modes de fonctionnement sont possibles: mode fusée seule et mode mixte fusée-stato.

La présente invention vise à remédier aux inconvénients précités et à réaliser un moteur à propulsion combinée capable de fonctionner selon cinq modes de fonctionnement différents, à savoir en mode aérobie, en mode anaérobie aussi bien qu'en mode mixte ainsi que selon un mode turbo ou un mode stato, et pouvant passer d'un mode de fonctionnement à un autre de façon réversible, sans que les modes transitoires engendrent des surcontraintes significatives et sans qu'il soit nécessaire d'éjecter un quelconque capotage, chaque mode de fonctionnement étant ajustable aux conditions de vol.

La présente invention vise également à réaliser un moteur à propulsion combinée présentant un rendement satisfaisant pour chacun des modes de fonctionnement possibles et permettant une adaptation permanente, quelle que soit l'altitude, de la poussée au profil de mission et aux conditions de vol.

L'invention vise encore à permettre d'adapter en permanence la poussée aux besoins et en particulier de fonctionner simultanément en mode fusée et en mode turbo-réacteur, pour disposer d'une poussée maximum, par exemple pour le décollage ou encore de passer progressivement du mode aérobie au mode anaérobie pour assurer une continuité et une constance de la poussée au sortir des couches denses de l'atmosphère.

Un autre but de l'invention consiste à garantir une continuité des veines de gaz en combustion et un mélange de flux présentant un minimum de turbulences pour les divers modes de fonctionnement possibles, de sorte que malgré sa grande adaptabilité, le moteur conserve un rendement élevé.

Ces buts sont atteints grâce à un moteur à propulsion combinée pour aéronef ou avion spatial du type défini en tête de la description, caractérisé en ce que la chambre de combustion annulaire du moteur-fusée est disposée à l'intérieur du corps central du moteur à réaction, est située à la partie aval de la chambre de combustion aérobie, dans la partie arrière du corps central, et est elle-même délimitée par un corps central profilé prolongeant le corps central de la chambre de combustion aérobie en constituant un dard qui pénètre dans la tuyère externe au niveau de son col tout en assurant la continuité aérodynamique de la veine de gaz en combustion issue de la chambre de combustion aérobie, et en ce que des moyens sont prévus pour modifier la position axiale de la tuyère externe du moteur à réaction afin d'adapter, au col de ladite tuyère, la section de passage de la veine de gaz en combustion issue de la chambre de combustion aérobie, pour différentes conditions de fonctionnement internes et externes au moteur, le moteur à réaction aérobie et le moteur-fusée anaérobie pouvant fonctionner alternativement ou simultanément en fonctionnement mixte selon les phases de vol.

Le moteur à réaction fonctionnant en mode aérobie peut comprendre un stato-réacteur, un turbo-réacteur ou encore une turbo-fusée constituée par un turbo-réacteur dont la turbine est alimentée par un générateur de gaz séparé anaérobie.

Le moteur à réaction fonctionant en mode aérobie peut encore comprendre un turbo-réacteur pouvant fonctionner en stato-réacteur par arrêt de l'alimentation de la turbine du turbo-compresseur du turbo-réacteur, de sorte que le compresseur peut tourner librement par auto-rotation.

Le moteur combiné selon l'invention peut fonctionner alternativement ou simultanément en modes aérobie ou anaérobie et maintient un rendement satisfaisant pour chacun des modes de fonctionnement en assurant pour chacun d'eux la continuité des veines de gaz de combustion.

En particulier, l'ouverture de la chambre annulaire du moteur-fusée est proportionnée à la largeur de la chambre de combustion aérobie afin d'obtenir un mélange de flux présentant un minimum de turbulences.

Parmi les avantages du fonctionnement en mode mixte et de la réversibilité des divers modes de fonctionnement, on peut noter la possibilité d'utiliser le moteur-fusée pour fournir une poussée d'appoint au décollage, ainsi que la possibilité d'utiliser le moteur-fusée en même temps qu'en fonctionnement en mode stato-réacteur par exemple lorsque le véhicule arrive à haute altitude et grande vitesse et que la poussée du stato-réacteur chute, permettant ainsi une certaine constance de la poussée du moteur.

Le fonctionnement en mode mixte permet d'adapter au mieux à chaque instant la poussée aux besoins. Ce fonctionnement en mode mixte permet en outre de réduire le débattement du dispositif à géométrie variable constitué par la tuyère mobile, le flux de gaz anaérobie pouvant créer une variation artificielle de la section au col de la tuyère externe de la veine aérobie.

Ainsi, selon une caractéristique particulière, le moteur à propulsion combinée selon la présente invention, comprend des moyens de modulation du débit du moteur-fusée de façon à adapter la section au col de la tuyère externe de la veine aérobie aux conditions de combustion anaérobie occupant au niveau du col de la tuyère externe de la veine aérobie une section prédéterminée quine laisse aux gaz issus de la chambre de combustion aérobie que la section qui leur est strictement nécessaire en fonction des conditions de fonctionnement externes au moteur.

Les moyens de modulation du débit du moteur-fusée consistent en des ajustements de la pression et du débit des gaz injectés dans chaque turbine d'une turbo-pompe d'alimentation du moteur en propergols, principalement grâce aux vannes d'alimentation de ces turbines.

L'agencement selon la présente invention permet une adaptation permanente de la poussée au profil de mission et aux conditions de vol, tout en conservant un rendement satisfaisant.

Avantageusement, la tuyère aérobie externe est réglable axialement sur une plage qui permet en mode de fonctionnement anaérobie seul de faire en sorte que le jet de gaz issus de la chambre de combustion anaérobie atteigne tangentiellement la paroi de la tuyère externe évitant ainsi l'apparition de points chauds et d'ondes de choc.

Par ailleurs, de préférence, la tuyère aérobie est réglable axialement sur une plage qui permet en mode de fonctionnement anaérobie seul de venir obturer la veine aérobie afin d'éviter les recirculations de gaz chauds dans la chambre de combustion aérobie.

Selon un mode particulier de réalisation, le moteur combiné comprend une couronne de volets mobiles, montés flottants à la sortie de la chambre annulaire du moteur fusée pour obturer cette dernière lors d'un fonctionnement du moteur à réaction seul tandis qu'en fonctionnement mixte ou anaérobie seul, l'ouverture des volets est assurée par la différence de pression entre les faces interne et externe des volets.

Dans ce cas, il peut être en outre prévu un dispositif d'amortissement, de préférence du type à friction, à commande pneumatique ou hydraulique, associé aux volets flottants pour éviter les vibrations, et de petits vérins pour assurer la fermeture des volets lors de l'arrêt du moteur.

Selon un autre mode particulier de réalisation possible, le moteur combiné comprend une couronne de volets mobiles qui sont actionnés par des vérins préférentiellement du type pneumatique ou à vis à billes et sont montés à la sortie de la chambre annulaire du moteur-fusée pour obturer cette dernière lors d'un fonctionnement du moteur à réaction seul afin d'éviter les recirculations de gaz chauds issus de la veine aérobie et pour être disposés en position d'ouverture intermédiaire en mode de fonctionnement mixte afin de minimiser les interactions entre les flux aérobie et anaérobie et contribuer à adapter la section au col de la tuyère externe parcourue par la veine aérobie.

Dans ce cas, en mode de fonctionnement moteur-fusée seul, les volets peuvent être mise en position de pleine ouverture pour obturer la chambre de combustion aérobie parcourue par la veine aérobie afin d'y éviter les recirculations de gaz chauds.

La présence d'une couronne de volets mobiles flottants a pour effet de limiter les turbulences, à la rencontre des flux anaérobie et aérobie, et d'accroître ainsi le rendement.

La présence d'une couronne de volets commandés, en agissant sur la section réservée au flux aérobie, a des effets de même nature que ceux de la tuyère mobile. Cette couronne de volets permet donc de réduire la course de cette tuyère mobile, ce qui en réduit le coût et en accroît la fiabilité.

Selon encore un autre mode particulier de réalisation, le moteur combiné selon l'invention comprend des moyens en mode de fonctionnement moteur fusée seul, pour balayer la veine aérobie parcourant la chambre de combustion aérobie à l'aide d'un flux gazeux à basse température afin de refroidir la zone d'impact du jet en expansion sortant de la chambre de combustion du moteur-fusée sur la paroi de la tuyère aérobie externe, et de faciliter le recollement dudit jet sur ladite paroi.

Les moyens pour obtenir un flux gazeux de balayage à basse température peuvent comprendre l'injection dans la veine aérobie d'un débit de combustible le cas échéant partiellement réchauffé dans le moteur-fusée, ou encore l'injection dans la veine aérobie de gaz issus des turbines des turbo-pompes du moteur-fusée.

Le moteur à propulsion combinée peut encore comprendre des moyens en mode de fonctionnement aérobie seul, pour balayer la chambre de combusion du moteur-fusée par un flux gazeux à basse température afin d'éviter les recirculations des gaz chauds issus de la veine aérobie.

Selon un mode de réalisation particulier possible, le corps central profilé à pointe émergeante délimitant la chambre de combustion annulaire du moteur-fusée est légèrement tronqué, et un circuit de refroidissement est disposé à l'intérieur du corps central profilé.

La partie tronquée du corps central délimitant la chambre de combustion annulaire du moteur-fusée peut comprendre une tuyère d'éjection de débits gazeux piégés ou perdus dans la mesure où leurs pressions sont supérieures à la pression règnant dans la tuyère à l'extrémité du corps central. Ces débits peuvent être collectés dans une conduite axiale traversant le corps central.

Toutefois, de préférence, le corps central profilé à pointe émergeante délimitant la chambre de combustion annulaire du moteur-fusée est réalisée au moins en partie à l'aide de matériaux composites thermostructuraux.

Dans ce cas, le corps central n'est donc pas tronqué et peut fonctionner sans dispositif supplémentaire de refroidissement incorporé, compte tenu des caractéristiques des matériaux utilisés.

La chambre de combustion annulaire du moteur-fusée peut être réalisée en plusieurs segments, afin de faciliter la fabrication et la mise au point de cette chambre.

Dans ce cas, selon un premier mode de réalisation particulier, la chambre de combustion annulaire est constituée par une pluralité de chambres individuelles à section ayant la forme d'arcs de cercle qui sont disposées de façon jointive en couronne autour de l'axe du corps central.

Selon un autre mode de réalisation particulier, la chambre de combustion annulaire est constituée par une pluralité de chambres individuelles à section de forme elliptique qui sont disposées de façon jointive en couronne autour de l'axe du corps central.

Selon encore un autre mode de réalisation particulier, la chambre de combustion annulaire est constituée par une pluralité de chambres individuelles à section de forme circulaire qui sont disposées de façon jointive en couronne autour de l'axe du corps central.

Avantageusement, les chambres individuelles de la chambre de combustion annulaire segmentée sont commandées de façon individuelle et sélective de sorte que dans certaines phases de vol seule une fraction des chambres individuelles de la chambre de combustion annulaire segmentée est en service.

Le moteur-fusée peut fonctionner selon un cycle dit à "flux dérivé", à "flux intégré", ou de type "expander". Compte tenu des flux thermiques très importants dans les parois de la chambre de combusion annulaire, un moteur-fusée de type "expander" est particulièrement bien adapté à un moteur à propulsion combinée selon la présente invention.

Selon un mode particulier de réalisation particulièrement avantageux, la chambre de combustion annulaire du moteur-fusée anaérobie est délimitée par une première paroi tronconique externe et une seconde paroi tronconique interne coaxiales définissant une chambre annulaire dont la partie aval est plus éloignée de l'axe du moteur que la partie amont, la première paroi tronconique externe se prolonge tangentiellement à sa partie aval par une portion de paroi formant la paroi externe de la tuyère du moteur-fusée et présentant une concavité tournée vers l'intérieur de la tuyère et la seconde paroi tronconique interne se prolonge à sa partie aval par une portion de paroi en saillie vers l'intérieur de la chambre annulaire et formant la paroi interne de la tuyère du moteur-fusée en présentant une convexité tournée vers l'intérieur de la tuyère.

Dans ce cas, le corps central profilé prolongeant le corps central de la chambre de combustion aérobie en constituant un dard comprend ladite seconde paroi tronconique interne, ladite portion de paroi en saillie formant la paroi interne de la tuyère du moteur-fusée, et une paroi courbe en forme de pointe présentant une concavité tournée vers l'extérieur et située au niveau du col de la tuyère aérobie externe.

Le corps central de la chambre de propulsion aérobie se termine à sa partie aval par une partie recourbée vers l'axe du moteur et raccordée à l'extrémité libre aval de la portion de paroi formant la paroi externe de la tuyère du moteur-fusée.

Ces configurations particulières permettent de contrôler au mieux la répartition des écoulements gazeux aussi bien en mode mixte, avec écoulement aérobie prépondérant ou écoulement anaérobie prépondérant, qu'en mode fusée seul.

Le moteur à propulsion combinée selon la présente invention peut présenter de nombreuses variantes. Ainsi, il est possible de mettre en oeuvre dans le moteur à réaction un compresseur comprenant des aubages à calage variable et présentant des paramètres de fonctionnement (vitesse, débit, puissance) modifiables selon les phases de vol.

Le moteur à réaction du moteur combiné peut également comprendre pour certaines applications particulières un compresseur à rotors contra-rotatifs.

De façon avantageuse, afin d'obtenir un rendement satisfaisant du moteur à la fois dans l'atmosphère et dans le vide le moteur combiné comprend un divergent déployable raccordé à la tuyère externe aérobie et muni de moyens de commande de déploiement du divergent déployable.

D'autres caractéristiques et avantages de l'invention ressortiront de la description suivante de modes particuliers de réalisation, donnés à titre d'exemples, en référence aux dessins annexés, sur lesquels:
- les figures 1A et 1B représentent schématiquement en coupe axiale un exemple de moteur à propulsion combinée selon la présente invention, la demi-coupe axiale supérieure de la figure 1A correspondant à un mode de fonctionnement pour un vol à basse altitude et la demi-coupe axiale inférieure de la figure 1B correspondant à un mode de fonctionnement pour un vol à haute altitude,
- la figure 2 est une vue en demi-coupe axiale du moteur de la figure 1, montrant un exemple particulier de réalisation avec une forme de tuyère spécifique pour le moteur-fusée et le moteur aérobie,
- la figure 3 est une vue en demi-coupe axiale du moteur de la figure 1 montrant un autre exemple particulier de réalisation d'une tuyère spécifique pour le moteur-fusée et le moteur aérobie, avec une répartition des écoulements gazeux en mode de fonctionnement mixte avec un écoulement aérobie prépondérant,
- les figures 4A et 4B sont des vues en coupe axiale analogues à celle de la figure 3 mais avec représentation de la répartition des écoulements gazeux montrant, dans la demi-coupe axiale supérieure de la figure 4A un fonctionnement en mode mixte avec écoulement anaérobie prépondérant, et dans la demi-coupe axiale inférieure de la figure 4B un fonctionnement en mode fusée seul,
- les figures 5A et 5B représentent schématiquement en coupe axiale une variante de réalisation du moteur à propulsion combinée selon la figure 1, dans laquelle une couronne de volets mobiles est disposée à la sortie de la chambre de combustion annulaire du moteur-fusée, les volets mobiles étant en position fermée dans la demi-coupe supérieure de la figure 5A et en position ouverte dans la demi-coupe inférieure de la figure 5B,
- les figures 6A, 6B, 6C représentent un détail des figures 5A et 5B montrant un volet mobile dans trois positions différentes correspondant respectivement à un mode de fonctionnement aérobie seul, un mode de fonctionnement mixte et un mode de fonctionnement anaérobie seul,
- la figure 7 représente en coupe axiale une partie du moteur de la figure 1 selon un mode particulier de réalisation dans lequel le corps central du moteur-fusée est légèrement tronqué et muni d'un système de refroidissement incorporé,
- les figures 8A et 8B représentent en coupe axiale une partie du moteur de la figure 1 selon un mode particulier de réalisation permettant une obturation de la veine gazeuse aérobie par un simple déplacement axial de la tuyère aérobie, la demi-coupe supérieure de la figure 8A montrant la tuyère en position de dégagement de la veine gazeuse aérobie et la demi-coupe inférieure de la figure 8B montrant la tuyère en position d'obturation de la veine gazeuse aérobie,
- la figure 9 représente en demi-coupe axiale une partie du moteur de la figure 1 selon un mode particulier de réalisation permettant, en mode de fonctionnement anaérobie, la création d'un jet de gaz de configuration particulière,
- la figure 10 représente en coupe axiale une partie du moteur combiné de la figure 1 selon un mode particulier de réalisation dans lequel une modulation du débit du moteur-fusée permet d'ajuster la section du jet de gaz issus de la chambre de combustion anaérobie,
- la figure 11 représente en coupe axiale une partie du moteur combiné de la figure 1 selon une variante de réalisation dans laquelle une tuyère d'éjection de débits de gaz récupérés est incorporée dans la partie tronquée du corps central de la chambre annulaire du moteur-fusée, et
- les figures 12 à 14 représentent des vues en coupe perpendiculaire à l'axe du moteur à propulsion combinée montrant trois exemples particuliers de réalisation d'une chambre de combustion annulaire segmentée.

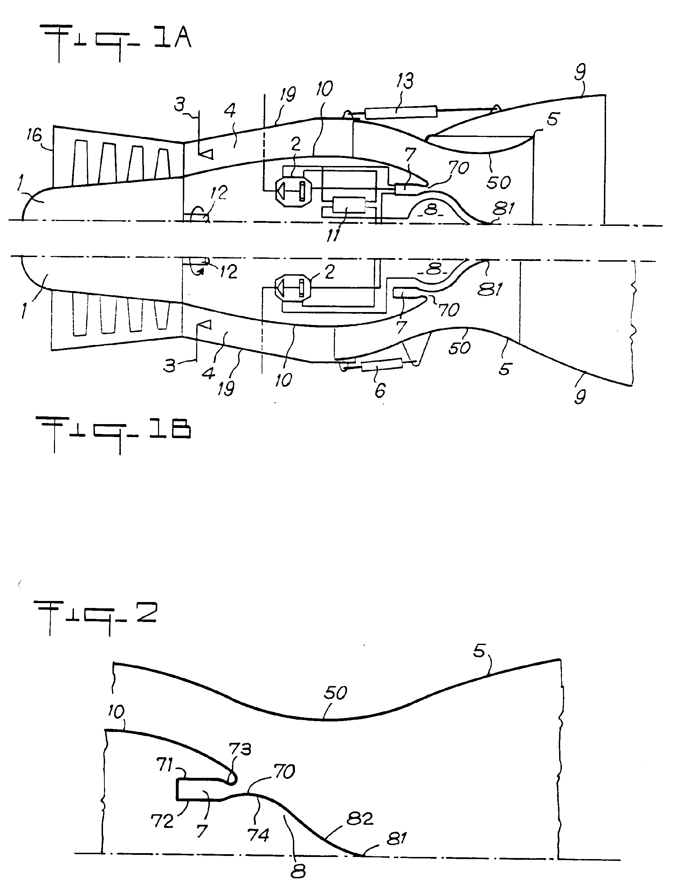

Si l'on considère la figure 1, on voit un moteur à propulsion combinée selon un mode particulier de réalisation de l'invention, qui comprend une enveloppe exterieure 19 à l'intérieur de laquelle sont disposés un compresseur d'air 1 placé à l'avant de l'ensemble propulsif et alimenté à partir d'une entrée d'air 16, et un corps central 10 délimitant avec l'enveloppe extérieure 19 une chambre de combustion 4 qui est alimentée en air sous pression par le compresseur 1 et comprend des dispositifs 3 d'injection de combustible, pour constituer un moteur à réaction aérobie.

Le compresseur 1 peut être entraîné par une turbine aérobie classique. Toutefois, dans le cas d'un système turbo-fusée, tel que celui représenté sur la figure 1, le compresseur 1 peut être entraîné par un arbre 12 à partir d'une turbine interne, non représentée, disposée dans le corps central 10 et alimentée par exemple par un générateur de gaz anaérobie 11 également disposé dans le corps central 10. On a représenté sur la figure 1 un générateur de gaz 11 et une turbo-pompe 2 d'alimentation d'une chambre de combustion 7 du moteur-fusée et du générateur de gaz 11 en propergol. Toutefois, le générateur de gaz 11 peut être supprimé si le moteur à propulsion combinée fonctionne selon le cycle classique préférentiel connu sous l'appellation de cycle expander.

Les gaz chauds obtenus dans la chambre de combustion 4 de l'ensemble constituant un turbo-réacteur ou une turbo-fusée, sont accélérés et éjectés à travers une tuyère 5 dont la position axiale est ajustable et qui prolonge l'enveloppe 19 à l'arrière de l'ensemble propulsif.

Le compresseur 1 et ses éléments associés peuvent être supprimés si le moteur à réaction est constitué par un simple stato-réacteur avec une entrée d'air 16, un dispositif d'injection de combustion 3, une chambre de combustion aérobie 4 et une tuyère 5.

Un moteur à réaction de type turbo-réacteur ou turbo-fusée, tel que celui représenté sur la figure 1 peut toutefois également fonctionner en stato-réacteur. Dans ce cas, le compresseur 1 est mis en roue libre et la compression de l'air est obtenue par l'adaptation de la géométrie de la veine d'air formée à partir de l'orifice d'entrée d'air 16. Cet air alimente la même chambre de combustion 4 et la tuyère 5 est positionnée de façon à adapter la géométrie de la veine au fonctionnement en mode stato-réacteur.

La tuyère 5 est prolongée par un divergent déployable 9 qui permet d'adapter la tuyère 5 en fonctionnement à haute altitude, domaine de prédilection pour le fonctionnement en mode stato-réacteur.

La tuyère principale 5, dont la position axiale est ajustable, coopère avec un dispositif d'activation 6, qui peut être constitué par exemple par des vérins. De même, le divergent déployable 9 coopère avec un dispositif d'extension 13 qui peut également comprendre des vérins.

La tuyère 5 et le divergent déployable 9 sont représentés, sur la demi-coupe axiale supérieure de la figure 1A, dans leur position correspondant à un vol à basse altitude. Dans ce cas, le divergent déployable 9 est en position non active et la tuyère 5 présente un col 50 situé dans une position arrière. Sur la demi-coupe axiale inférieure de la figure 1B, la tuyère 5 et le divergent déployable 9 sont représentés dans leur position correspondant à un vol à haute altitude. Dans ce cas, le divergent 9 est en position déployée, et la tuyère 5 est dans une position axiale déplacée vers l'avant du système propulsif.

Un moteur-fusée à propergols liquides ou gazeux est disposé à l'arrière du corps central 10, c'est-à-dire dans la partie aval de la chambre de combustion 4, si l'on prend en considération le sens d'écoulement du flux gazeux.

Le moteur-fusée comprend essentiellement une chambre de combustion annulaire 7 disposée à la partie arrière du corps central 10 et délimitée du côté tourné vers l'axe du moteur par une partie de corps central profilé 8 qui prolonge le corps central 10 de la chambre de combustion 4 en constituant un dard qui pénètre dans la tuyère externe 5 au niveau de son col 50 tout en assurant la continuité aérodynamique, de la veine de gaz en combustion issue de la chambre de combustion aérobie 4.

Ainsi, selon un aspect important de la présente invention le moteur-fusée comprend une chambre de combustion annulaire 7 avec un corps central 8 et la chambre de combustion aérobie 4 de turbo-réacteur ou stato-réacteur est située en amont de la chambre de combustion 7 du moteur-fusée et non en aval ou au même niveau comme dans la plupart des projets de moteur combiné. Selon l'invention, la chambre de combustion 7 du moteur-fusée et le corps central profilé associé 8 sont ainsi partiellement intégrés dans la tuyère principale 5 et le corps central profilé 8 pénètre dans la tuyère principale 5 au niveau de son col tout en présentant une géométrie qui assure la continuité aérodynamique de la veine aérobie issue de la chambre de combustion aérobie 4 pour être éjectée à travers la tuyère 5.

Le corps central à pointe émergeante 8 assure ainsi d'une part une expansion optimale des gaz de combustion issus de la chambre annulaire 7, pour une importante variation de la pression dans la veine d'air qui l'entoure, et d'autre part, un profilage de la partie intérieure de la veine d'air aérobie. La surface de sortie de la chambre de combustion 7 reste réduite de sorte que l'écoulement dans la veine d'air n'est pratiquement pas perturbé sans qu'il soit nécessaire d'installer un capotage éjectable.

La dimension de la zone annulaire 70 de sortie de la chambre de combustion 7 du moteur-fusée est proportionnel à la largeur de la chambre aérobie 4 de façon à ne pas perturber de façon sensible l'écoulement des gaz dans la veine aérobie et à permettre ainsi un mélange de flux présentant un minimum de turbulence.

La modification de la position axiale de la tuyère principale 5 permet d'adapter la section de la veine aérobie au col 50 de la tuyère principale 5 en fonction des conditions de fonctionnement internes et externes au moteur, qui dépendent du mode de fonctionnement qui peut être un fonctionnement en turbo-réacteur (ou turbo-fusée) seul, en turbo-réacteur (ou turbo-fusée) et moteur-fusée, en stato-réacteur seul, en stato-réacteur et moteur-fusée ou encore en moteur-fusée seul.

Avec le moteur à propulsion combinée selon la présente invention, il est possible d'adapter en permanence la poussée aux besoins et en particulier de fonctionner simultanément en mode fusée et en mode turbo-réacteur, pour disposer d'une poussée maximum, par exemple pour le décollage ou encore de passer progressivement du mode aérobie au mode anaérobie pour assurer une continuité et une constance de la poussée au sortir des couches denses de l'atmosphère. Dans ce cas, les gaz issus du moteur-fusée peuvent créer une réduction artificielle de la section au col de la veine aérobie, de sorte qu'il n'est pas nécessaire de disposer d'une grande course de la tuyère externe 5 pour obtenir la réduction de section qui est indispensable à haute altitude et grande vitesse.

La demi-coupe supérieure de la figure 1A correspond à des conditions de vol à basse altitudee avec la tuyère aérobie 5 placée en position arrière, la pointe 81 du corps profilé 8 étant située sensiblement au niveau du col 50 de la tuyère de manière à ménager une grande section de passage. Le divergent déployable 9 est lui-même en position rétractée.

La demi-coupe inférieure de la figure 1B correspond à des conditions de vol à haute altitude, avec la tuyère aérobie 5 placée dans une position axiale déplacée vers l'avant de sorte que le col 50 se trouve en regard d'une partie plus large du corps profilé 8, ce qui limite la section de passage de la tuyère. Parallèlement, le divergent déployable 9 est en position déployée pour accroître la section de sortie de la tuyère.

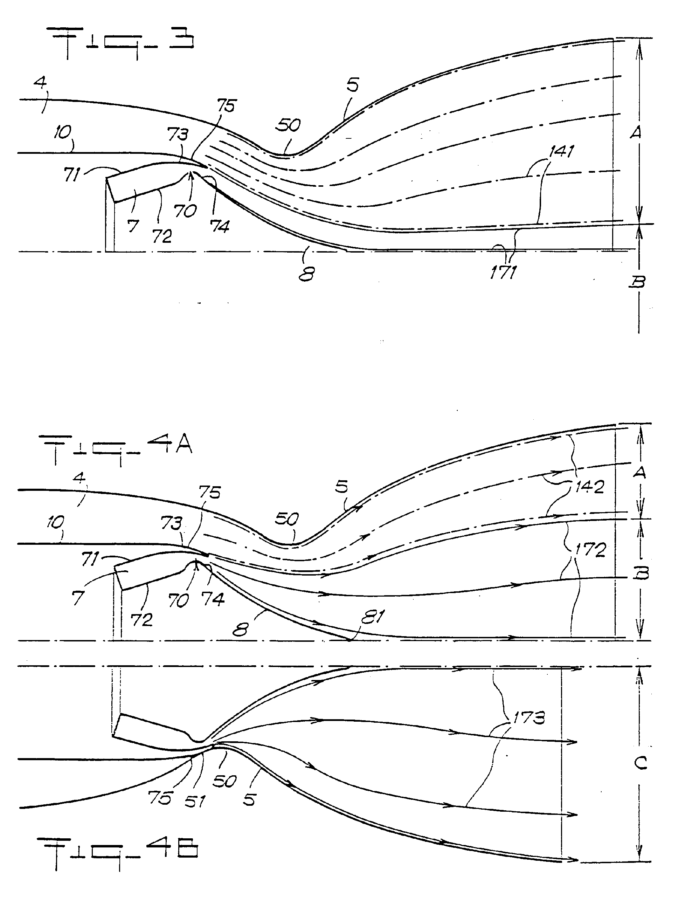

La figure 2 montre un mode de réalisation particulier avec une configuration particulière de la chambre de combustion annulaire 7 du moteur-fusée, de la tuyère de sortie 70 de ce moteur-fusée et du corps profilé 8 pénétrant dans la tuyère externe 5 au niveau du col 50 de celle-ci. Selon cette configuration particulière, la chambre de combustion annulaire 7 du moteur-fusée anaérobie est délimitée par une première paroi tronconique externe 71 et une seconde paroi tronconique interne 72 coaxiales définissant une chambre annulaire 7, la première paroi tronconique externe 71 se prolonge à sa partie aval par une ' portion de paroi 73 formant une prohéminence vers l'extérieur de la chambre annulaire 7 et formant la paroi externe de la tuyère 70 du moteur-fusée. La seconde paroi tronconique interne 72 se prolonge à sa partie aval par une portion de paroi 74 formant une proéminence vers l'intérieur de la chambre annulaire 7 et formant la paroi interne de la tuyère 70 du moteur-fusée en présentant une convexité tournée vers l'intérieur de la tuyère 70.

La partie de corps central profilé 8 prolongeant le corps central 10 de la chambre de combustion aérobie 4 en constituant un dard est constitué par la seconde paroi tronconique interne 72, la portion de paroi 74 en saillie formant la paroi interne de la tuyère 70 du moteur-fusée, et par une paroi courbe 82 en forme de pointe présentant une concavité tournée vers l'extérieur et située au niveau du col 50 de la tuyère aérobie externe 5.

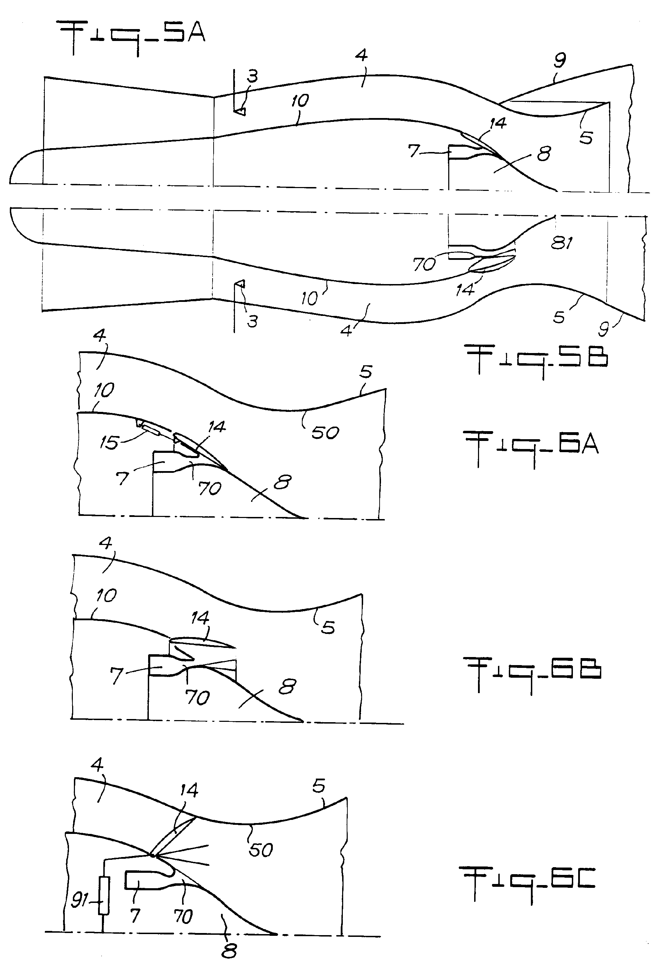

La figure 3 montre une autre configuration particulière de la chambre de combustion annulaire 7 du moteur-fusée, de la tuyère de sortie 70 de ce moteur-fusée et du corps profilé 8 pénétrant dans la tuyère externe 5 au niveau du col 50 de celle-ci. Selon cette configuration particulière, la chambre de combustion annulaire 7 du moteur-fusée anaérobie est délimitée par une première paroi tronconique externe 71 et une seconde paroi tronconique interne 72 coaxiales définissant une chambre annulaire 7 dont la partie aval est plus éloignée de l'axe du moteur que la partie amont, la première paroi tronconique externe 71 se prolonge tangentiellement à sa partie aval par une portion de paroi 73 formant la paroi externe de la tuyère 70 du moteur-fusée et présentant une concavité tournée vers l'intérieur de la tuyère 70. La seconde paroi tronconique interne 72 se prolonge à sa partie aval par une portion de paroi 74 formant une proéminence vers l'intérieur de la chambre annulaire 7 et formant la paroi interne de la tuyère 70 du moteur-fusée en présentant une convexité tournée vers l'intérieur de la tuyère 70.

Le corps central profilé 8 prolongeant le corps central 10 de la chambre de combustion aérobie 4 en constituant un dard est constitué par la seconde paroi tronconique interne 72, la portion de paroi 74 en saillie formant la paroi interne de la tuyère 70 du moteur-fusée, et par une paroi courbe 82 en forme de pointe présentant une concavité tournée vers l'extérieur et située au niveau du col 50 de la tuyère aérobie externe 5.

Le corps central 10 de la chambre de combustion aérobie 4 se termine à sa partie aval par une partie 75 recourbée vers l'axe du moteur et raccordée à l'extrémité libre aval de la portion de paroi 73 formant la paroi externe de la tuyère 70 du moteur-fusée.

Les configurations des figures 2 et 3 permettent d'optimiser le fonctionnement du moteur à propulsion combinée pour les divers modes de fonctionnement possibles en garantissant notamment une continuité des veines de gaz en combustion et un mélange de flux présentant un minimum de turbulences, pour différentes positions axiales de la tuyère 5.

La figure 3 montre la répartition des écoulements gazeux dans le cas d'un mode de fonctionnement mixte, avec un écoulement aérobie A prépondérant provenant de la chambre de combustion aérobie 4, matérialisé par des lignes de flux 141, et un écoulement anaérobie B provenant de la chambre de combustion anaérobie 7, matérialisé par des lignes de flux 171.

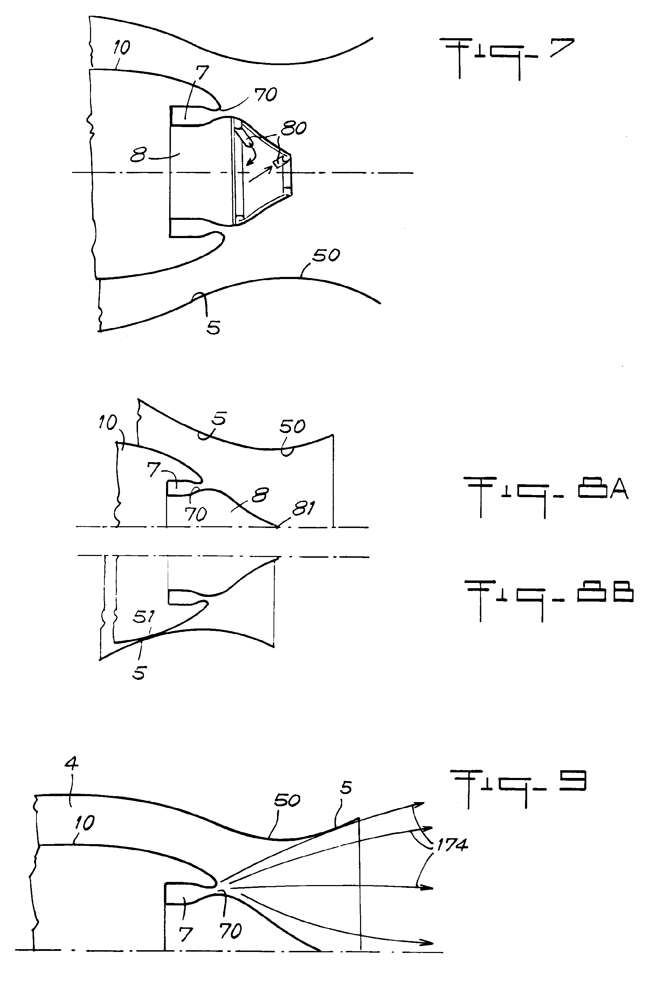

La demi-coupe supérieure de la figure 4A montre la répartition des écoulements gazeux également dans le cas d'un mode de fonctionnement mixte pour la même configuration que sur la figure 3, mais avec un écoulement anaérobie B prépondérant provenant de la chambre de combustion anaérobie 7, matérialisé par des lignes de flux 172, et un écoulement aérobie A réduit provenant de la chambre de combustion aérobie 4, matérialisé par des lignes de flux 142.

La demi-coupe inférieure de la figure 4B montre la répartition des écoulements gazeux dans le cas d'un mode de fonctionnement en moteur-fusée seul. Dans ce cas, on voit un seul écoulement anaérobie C provenant de la chambre de combustion annulaire anaérobie 7, matérialisé par des lignes de flux 173. Pour ce mode de fonctionnement, la tuyère 5 est placée dans sa position axiale la plus avancée, dans laquelle la partie de paroi rentrante 51 délimitant le col 50 est en contact avec l'extrémité arrière 75 du corps central 10 formant la paroi interne de la chambre de combustion 4, de sorte que la veine aérobie en provenance de cette chambre de combustion 4 est obturée, ce qui évite les recirculations de gaz chauds.

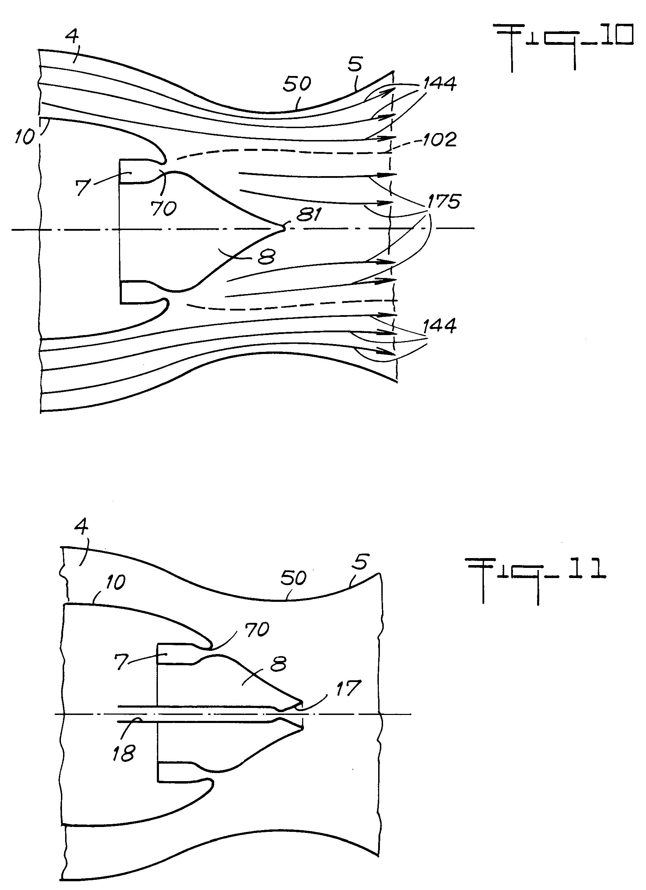

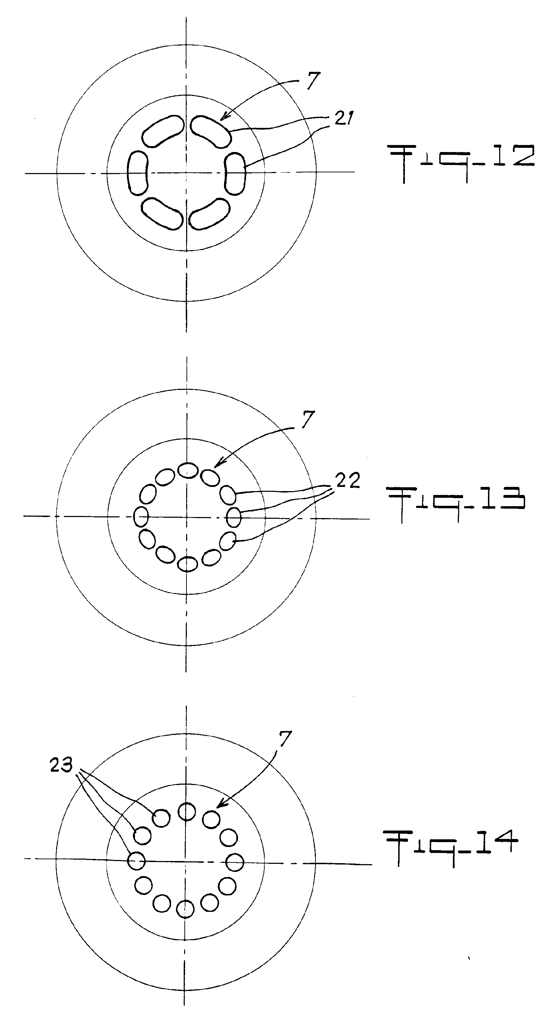

Si l'on se reporte aux figures 5A, 5B et 6A, 6B, 6C, on voit un mode particulier de réalisation de moteur combiné qui est analogue à celui de la figure 1, mais qui comprend en outre une série de volets mobiles 14 disposés en couronne autour de la sortie de la chambre de combustion annulaire 7 du moteur-fusée pour permettre une obturation sélective de ladite sortie.

Les volets 14 articulés sur la partie d'extrémité arrière du corps central 10 peuvent être montés flottants. Dans ce cas, ils peuvent assurer l'obturation de la sortie de la chambre de combustion 7, en mode de fonctionnement aérobie (demi-coupe supérieure de la figure 5A, figure 6A), l'obturation de la veine aérobie (Fig 6C) dans un mode de fonctionnement anaérobie, les volets 14 étant complètement déployés vers l'extérieur, ou encore, dans une position intermédiaire (demi-coupe inférieure de la figure 5B, figure 6B) l'ajustement de la section au col de la veine aérobie, le positionnement des volets étant assuré par le simple équilibrage des pressions entre le jet aérobie issu de la chambre de combustion 4 et le jet anaérobie issu de la chambre de combustion 7. Dans la mesure où les volets 14 contribuent à ajuster la section de la veine aérobie au col de la tuyère 5, la course axiale de cette dernière peut être réduite.

Un dispositif d'amortissement 91 peut être associé aux volets flottants 14 pour éviter les vibrations. De petits vérins 15 (Fig 6A) peuvent également être associés aux volets 14 pour assurer la fermeture des volets 14 lors de l'arrêt du moteur.

Selon une variante de réalisation, les volets mobiles 14 peuvent ne pas être montés flottants, mais être systématiquement associés à des vérins 15 disposés comme selon la figure 6A ou à la place du dispositif d'amortissement de la figure 6C, qui permettent de commander en permanence la position des volets 14 afin de réaliser des fonctions mentionnées plus haut d'obturation de la sortie de la chambre annulaire 7 lors d'un mode de fonctionnement aérobie seul, d'obturation de la sortie de la chambre de combustion 4 lors d'un mode de fonctionnement anaérobie seul et d'ajustement dans une position d'ouverture intermédiaire en mode de fonctionnement mixte.

La figure 7 montre un mode particulier de réalisation dans lequel le corps central profilé à pointe émergeante 8 est légèrement tronqué pour permettre la mise en place d'un circuit de refroidissement 80 à l'intérieur de ce corps central soumis à des températures très élevées sous l'influence des gaz de combustion issus de l'une ou l'autre des deux chambres de combustion 4 et 7. On notera toutefois que l'utilisation de matériaux composites thermostructuraux pour la réalisation du corps central profilé 8 permet d'éviter la nécessité de tronquer celui-ci et d'utiliser un circuit de refroidissement dans la mesure où les matériaux composites thermo-structuraux sont eux-mêmes adaptés pour résister à de hautes températures.

Les figures 8A et 8B montrent un mode de réalisation selon lequel la tuyère aérobie 5 est réglable axialement en position sur une plage qui permet en mode de fonctionnement anaérobie seul (position de la demi-coupe inférieure de la figure 8B) de venir obturer complètement la veine aérobie par un contact tangentiel entre la paroi de la tuyère 5 (point 51) et le corps central 10. Ceci permet d'éviter les recirculations de gaz chauds dans la chambre de combustion aérobie 4.

La figure 9 montre un mode de réalisation selon lequel la tuyère aérobie 5 est réglable axialement en position sur une plage qui permet en mode de fonctionnement anaérobie seul (position de la tuyère 5 en traits pleins sur la figure 9), de faire en sorte que le jet de gaz issus de la chambre de combustion anaérobie 7, matérialisé par les lignes de flux 174, atteigne tangentiellement la paroi de la tuyère externe 5, évitant ainsi l'apparition de points chauds et d'ondes de choc.

La figure 10 correspond à un mode de réalisation dans lequel le débit du moteur-fusée est modulé de façon à adapter la section au col 50 de la tuyère externe 5 de la veine aérobie aux conditions de fonctionnement. Dans ce cas, le jet de gaz issus de la chambre de combustion anaérobie 7, matérialisé par les lignes de flux 175, occupe au niveau du col 50 de la tuyère externe 5, un volume central de section prédéterminée délimitée sur la figure 10 par des lignes 102 en traits discontinus. Les gaz issus de la chambre de combustion aérobie 4, matérialisés par les lignes de flux 144, ne disposent plus alors que d'un volume prédéterminé dont la section correspond strictement à la section théoriquement nécessaire en fonction des conditions de fonctionnement externes du moteur. Cette adaptation artificielle de la section de la veine aérobie permet de procéder à un complément d'ajustage de la section réelle de la veine aérobie au col 50 de la tuyère 5 et donc de limiter les déplacements axiaux de la tuyère 5. Cette possibilité est particulièrement intéressante lors d'un passage du mode aérobie au mode fusée à la sortie de l'atmosphère.

La figure 11 correspond à un mode de réalisation dans lequel une partie tronquée du corps central profilé 8 comprend une tuyère 17 d'éjection de débits gazeux perdus récupérés à l'intérieur du corps 10 et collectés dans une conduite axiale 18 traversant le corps central 10 et le corps central profilé 8. Ceci permet de récupérer une énergie qui sinon serait perdue à l'intérieur du corps central 10.

Le moteur combiné selon la présente invention peut présenter de nombreuses variantes.

A titre d'exemple, en mode de fonctionnement moteur-fusée seul, des moyens peuvent être prévus pour balayer la veine aérobie parcourant la chambre de combustion aérobie 4 à l'aide d'un flux gazeux à basse température, qui peut être partiellement réchauffé dans le moteur-fusée, ou encore à l'aide de gaz issus des turbines des turbo-pompes du moteur-fusée, afin de refroidir la zone d'impact du jet en expansion sortant de la chambre de combustion 7 sur la paroi de la tuyère externe 5 et de faciliter le recollement de ce jet sur cette paroi.

De façon similaire, en mode de fonctionnement aérobie seul, des moyens peuvent être prévus pour balayer la chambre de combustion 7 du moteur-fusée par un flux gazeux à basse température afin d'éviter les recirculations des gaz chauds issus de la veine aérobie.

Par ailleurs, comme représenté sur les figures 12 à 14, la chambre de combustion annulaire 7 du moteur-fusée peut être réalisée en plusieurs segments, afin de faciliter la fabrication de cette chambre.

Sur la figure 12, la chambre de combustion annulaire 7 est constituée par une pluralité de chambres individuelles 21 à section ayant la forme d'arcs de cercle qui sont disposées de façon jointive en couronne autour de l'axe du corps central.

Sur la figure 13, la chambre de combustion annulaire 7 est constituée par une pluralité de chambres individuelles 22 à section de forme elliptique qui sont disposées de façon jointive en couronne autour de l'axe du corps central.

Sur la figure 14, la chambre de combustion annulaire 7 est constituée par une pluralité de chambres individuelles 23 à section de forme circulaire qui sont disposées de façon jointive en couronne autour de l'axe du corps central.

La chambre de combustion annulaire segmentée est commandée de façon individuelle et sélective pour chaque chambre individuelle de sorte que dans certaines phases de vol seule une fraction des chambres individuelles de la chambre de combustion annulaire segmentée est en service.

## Revendications

1. Moteur à propulsion combinée à haute adaptabilité pour aéronef ou avion spatial, comprenant un moteur à réaction pour fonctionner dans l'atmosphère de façon aérobie et un moteur-fusée à propergols liquides ou gazeux pour fonctionner dans l'espace de façon anaérobie, le moteur à réaction comprenant un dispositif d'entrée d'air (16) et une tuyère externe (5) définissant avec un corps central (10) une chambre de combustion aérobie (4) parcourue par une veine aérobie de gaz en combustion, et le moteur-fusée comprenant une chambre de combustion annulaire anaérobie (7) et au moins une turbo-pompe (2) d'alimentation en propergol,
caractérisé en ce que la chambre de combustion annulaire (7) du moteur-fusée est disposée à l'intérieur du corps central (10) du moteur à réaction, est située à la partie aval de la chambre de combustion aérobie (4), dans la partie arrière du corps central (10), et est elle-même délimitée par une partie de corps central profilé (8) prolongeant le corps central (10) de la chambre de combustion aérobie (4) en constituant un dard qui pénètre dans la tuyère externe (5) au niveau de son col (50) tout en assurant la continuité aérodynamique de la veine de gaz en combustion issue de la chambre de combustion aérobie (4), et en ce que des moyens (6) sont prévus pour modifier la position axiale de la tuyère externe (5) du moteur à réaction afin d'adapter, au col (50) de ladite tuyère (5), la section de passage de la veine de gaz en combustion issue de la chambre de combustion aérobie (4), pour différentes conditions de fonctionnement internes et externes au moteur, le moteur à réaction aérobie et le moteur-fusée anaérobie pouvant fonctionner alternativement ou simultanément en fonctionnement mixte selon les phases de vol.

2. Moteur à propulsion combinée selon la revendication 1, caractérisé en ce que le moteur à réaction comprend un turbo-réacteur.

3. Moteur à propulsion combinée selon la revendication 1, caractérisé en ce que le moteur à réaction comprend une turbo-fusée constituée par un turbo-réacteur dont la turbine (2) est alimentée par un générateur de gaz (11) séparé anaérobie.

4. Moteur à propulsion combinée selon la revendication 1, caractérisé en ce que le moteur à réaction comprend un stato-réacteur.

5. Moteur à propulsion combinée selon la revendication 2 ou la revendication 3, caractérisé en ce qu'il comprend un turbo-réacteur pouvant fonctionner en stato-réacteur, par arrêt de l'alimentation de la turbine (2) du turbo-compresseur du turbo-réacteur, de sorte que le compresseur (1) peut tourner librement par auto-rotation.

6. Moteur à propulsion combinée selon l'une quelconque des revendications 1 à 5, caractérisé en ce qu'il comprend des moyens de modulation du débit du moteur-fusée de façon à adapter la section au col (50) de la tuyère externe (5) de la veine aérobie aux conditions de combustion anaérobie (7) occupant au niveau du col (50) de la tuyère externe (5) de la veine aérobie une section prédéterminée quine laisse aux gaz issus de la chambre de combustion aérobie (4) que la section qui leur est strictement nécessaire en fonction des conditions de fonctionnement externes au moteur, et en ce que lesdits moyens de modulation du débit du moteur-fusée comprennent des moyens de modification du débit ou de la pression de chaque flux de gaz entraînant une turbo-pompe.

7. Moteur à propulsion combinée selon l'une quelconque des revendications 1 à 5, caractérisé en ce que la tuyère aérobie externe (5) est réglable axialement sur une plage qui permet en mode de fonctionnement anaérobie seul de faire en sorte que le jet de gaz issus de la chambre de combustion anaérobie (7) atteigne tangentiellement la paroi de la tuyère externe (5) évitant ainsi l'apparition de points chauds et d'ondes de choc.

8. Moteur à propulsion combinée selon l'une quelconque des revendications 1 à 5, caractérisé en ce que la tuyère aérobie (5) est réglable axialement sur une plage qui permet en mode de fonctionnement anaérobie seul de venir obturer la veine aérobie afin d'éviter les recirculations de gaz chauds dans la chambre de combustion aérobie (4).

9. Moteur à propulsion combinée selon l'une quelconque des revendications 1 à 5, caractérisé en ce qu'il comprend une couronne de volets mobiles (14), montés flottants à la sortie de la chambre annulaire (7) du moteur fusée pour obturer cette dernière lors d'un fonctionnement du moteur à réaction seul tandis qu'en fonctionnement mixte ou anaérobie seul, l'ouverture des volets est assurée par la différence de pression entre les faces interne et externe des volets (14).

10. Moteur à propulsion combinée selon la revendication 9, caractérisé en ce qu'il comprend en outre un dispositif d'amortissement associé aux volets flottants (14) pour éviter les vibrations, et de petits vérins (15) pour assurer la fermeture des volets (14) lors de l'arrêt du moteur.

11. Moteur à propulsion combinée selon l'une quelconque des revendications 1 à 5, caractérisé en ce qu'il comprend une couronne de volets mobiles (14) actionnés par des vérins (15) et montés à la sortie de la chambre annulaire (7) du moteur-fusée pour obturer cette dernière lors d'un fonctionnement du moteur à réaction seul afin d'éviter les recirculations de gaz chauds issus de la veine aérobie et pour être disposés en position d'ouverture intermédiaire en mode de fonctionnement mixte afin de minimiser les interactions entre les flux aérobie et anaérobie et contribuer à adapter la section au col (50) de la tuyère externe (5) parcourue par la veine aérobie.

12. Moteur à propulsion combinée selon la revendication 11, caractérisé en ce que en mode de fonctionnement moteur-fusée seul, les volets (14) sont mis en position de pleine ouverture pour obturer la chambre de combustion aérobie (14) parcourue par la veine aérobie afin d'y éviter les recirculations de gaz chauds.

13. Moteur à propulsion combinée selon l'une quelconque des revendications 1 à 5, caractérisé en ce qu'il comprend des moyens, en mode de fonctionnement moteur fusée seul, pour balayer la veine aérobie parcourant la chambre de combustion aérobie (4) à l'aide d'un flux gazeux à basse température afin de refroidir la zone d'impact du jet en expansion sortant de la chambre de combustion (7) du moteur-fusée sur la paroi de la tuyère aérobie externe (5), et de faciliter le recollement dudit jet sur ladite paroi.

14. Moteur à propulsion combinée selon la revendication 13, caractérisé en ce que les moyens pour obtenir un flux de balayage à basse température comprennent l'injection dans la veine aérobie d'un débit de combustible le cas échéant partiellement réchauffé dans le moteur-fusée.

15. Moteur à propulsion combinée selon la revendication 13, caractérisé en ce que les moyens pour obtenir un flux gazeux de balayage à basse température comprennent l'injection dans la veine aérobie de gaz issus des turbines des turbopompes du moteur-fusée.

16. Moteur à propulsion combinée selon l'une quelconque des revendications 1 à 5, caractérisé en ce qu'il comprend des moyens, en mode de fonctionnement aérobie seul, pour balayer la chambre de combusion (7) du moteur-fusée par un flux gazeux à basse température afin d'éviter les recirculations des gaz chauds issus de la veine aérobie.

17. Moteur à propulsion combinée selon l'une quelconque des revendications 1 à 5, caractérisé en ce que le corps central profilé à pointe émergeante (8) délimitant la chambre de combustion annulaire (7) du moteur-fusée est légèrement tronqué, et en ce qu'un circuit de refroidissement (80) est disposé à l'intérieur dudit corps central profilé (8).

18. Moteur à propulsion combinée selon la revendication 17, caractérisé en ce que la partie tronquée du corps central (8) délimitant la chambre de combustion annulaire (7) du moteur-fusée comprend une tuyère (17) d'éjection de débits gazeux piégés ou perdus et collectés dans une conduite axiale (18) traversant le corps central (10) délimitant la chambre de combustion aérobie (4) et le corps central (8) délimitant la chambre de combustion annulaire (7) du moteur-fusée.

19. Moteur à propulsion combinée selon l'une quelconque des revendications 1 à 5, caractérisé en ce que le corps central profilé à pointe émergeante (8) délimitant la chambre de combustion annulaire (7) du moteur-fusée est réalisée au moins en partie à l'aide de matériaux composites thermostructuraux.

20. Moteur à propulsion combinée selon l'une quelconque des revendications 1 à 5, caractérisé en ce que la chambre de combustion annulaire (7) du moteur-fusée est réalisée en plusieurs segments.

21. Moteur à propulsion combinée selon la revendication 20, caractérisé en ce que la chambre de combustion annulaire (7) est constituée par une pluralité de chambres individuelles(21) a section ayant la forme d'arcs de cercle qui sont disposées de façon jointive en couronne autour de l'axe du corps central.

22. Moteur à propulsion combinée selon la revendication 20, caractérisé en ce que la chambre de combustion annulaire (7) est constituée par une pluralité de chambres individuelles (22) à section de forme elliptique qui sont disposées de façon jointive en couronne autour de l'axe du corps central.

23. Moteur à propulsion combinée selon la revendication 20, caractérisé en ce que la chambre de combustion annulaire (7) est constituée par une pluralité de chambres individuelles (23) à section de forme circulaire qui sont disposées de façon jointive en couronne autour de l'axe du corps central.

24. Moteur à propulsion combinée selon l'une quelconque des revendications 20 à 23, caractérisé en ce que les chambres individuelles de la chambre de combustion annulaire segmentee (7) sont commandées de façon individuelle et sélective de sorte que dans certaines phases de vol seule une fraction des chambres individuelles de la chambre de combustion annulaire segmentée (7) est en service.

25. Moteur à propulsion combinée selon l'une quelconque des revendications 1 a 5, caractérisé en ce que le compresseur (1) comprend des aubages à calage variable et présente des paramètres de fonctionnement modifiables selon les phases de vol.

26. Moteur à propulsion combinée selon l'une quelconque des revendications 1 à 5, caractérisé en ce que le compresseur (1) est à rotors contra rotatifs.

27. Moteur à propulsion combinée selon l'une quelconque des revendications 1 à 5, caractérisé en ce qu'il comprend un divergent déployable (9) raccordé à la tuyère externe aérobie (5) et muni de moyens (13) de commande de déploiement du divergent déployable (9).

28. Moteur à propulsion combinée selon l'une quelconque des revendications 1 a 27, caractérisé en ce que la chambre de combustion annulaire (7) du moteur-fusée anaérobie est délimitée par une première paroi tronconique externe (71) et une seconde paroi tronconique interne (72) coaxiales définissant une chambre annulaire (7) dont la partie aval est plus éloignée de l'axe du moteur que la partie amont, en ce que la première paroi tronconique externe (71) se prolonge tangentiellement a sa partie aval par une portion de paroi (73) formant la paroi externe de la tuyère (70) du moteur-fusée et présentant une concavité tournée vers l'intérieur de la tuyère (70) et en ce que la seconde paroi tronconique interne (72) se prolonge a sa partie aval par une portion de paroi (74) en saillie vers l'intérieur de la chambre annulaire (7) et formant la paroi interne de la tuyère (70) du moteur-fusée en présentant une convexité tournée vers l'intérieur de la tuyère (70).

29. Moteur a propulsion combinée selon la revendication 28, caractérisé en ce que le corps central profilé (8) prolongeant le corps central (10) de la chamcre de combustion aérobie (4) en constituant un dard comprend ladite seconde paroi tronconique interne (72), ladite portion de paroi (74) en saillie formant la paroi interne de la tuyère (70) du moteur-fusée, et une paroi courbe (82) en forme de pointe présentant une concavité tournée vers l'extérieur et située au niveau du col (50) de la tuyère aérobie externe (5).

30. Moteur à propulsion combinée selon la revendication 28 ou la revendication 29, caractérisé en ce que le corps central (10) de la chambre de combustion aérobie (4) se termine à sa partie aval par une partie recourbée vers l'axe du moteur et raccordée à l'extrémité libre aval de la portion de paroi (73) formant la paroi externe de la tuyère (70) du moteur-fusée.

## Patentansprüche

1. Hochanpassungsfähiges Kombinationstriebwerk für Luft- oder Raumfahrzeuge, umfassend ein Strahltriebwerk, das aerob in der Atmosphäre funktionieren soll, sowie ein Flüssigkeits- oder Gasraketentriebwerk, das anaerob im Raum funktionieren soll, wobei das Strahltriebwerk eine Lufteintrittsvorrichtung (16) und eine äußere Düse (5) umfaßt, die mit einem Mittelkörper (10) eine aerobe Brennkammer (4) bildet, die von einem aeroben Verbrennungsgasstrom durchzogen wird, und wobei das Raketentriebwerk eine ringförmige, anaerobe Brennkammer (7) und mindestens eine Turbospeisepumpe (2) für das Propergol umfaßt,
dadurch gekennzeichnet, daß die ringförmige Brennkammer (7) des Raketentriebwerks innerhalb des Mittelkörpers (10) des Strahltriebwerks angeordnet ist und sich im hinteren Bereich der aeroben Brennkammer (4) im hinteren Bereich des Mittelkörpers (10) befindet und selbst durch einen Teil eines erhabenen Mittelkörpers (8) begrenzt wird, der den Mittelkörper (10) der aeroben Brennkammer (4) verlängert und einen Zapfen bildet, der in die Außendüse (5) in Höhe ihres Halses (50) führt und dabei die aerodynamische Kontinuität des Verbrennungsgasstroms gewährleistet, der aus der aeroben Brennkammer (4) kommt, sowie dadurch, daß Vorrichtungen (6) vorgesehen sind, um die axiale Position der Außendüse (5) des Strahltriebwerks zu verändern, um am Hals (50) dieser Düse (5) den Durchschnittsquerschnitt für den aus der aeroben Brennkammer (4) kommenden Verbrennungsgasstrom unterschiedlichen internen und externen Betriebsbedingungen des Triebwerks anzupassen, wobei das aerobe Strahltriebwerk und das anaerobe Raketentriebwerk je nach Flugphase abwechselnd oder gleichzeitig kombiniert in Betrieb sein können.

2. Kombinationstriebwerk nach Anspruch 1, dadurch gekennzeichnet, daß das Strahltriebwerk ein TL-Triebwerk aufweist.

3. Kombinationstriebwerk nach Anspruch 1, dadurch gekennzeichnet, daß das Strahltriebwerk ein TL-Triebwerk umfaßt, dessen Turbine (2) von einem eigenen anaeroben Gasgenerator (11) gespeist wird.

4. Kombinationstriebwerk nach Anspruch 1, dadurch gekennzeichnet, daß das Strahltriebwerk einen Ramjet umfaßt.

5. Kombinationstriebwerk nach Anspruch 2 oder 3, dadurch gekennzeichnet, daß es ein TL-Triebwerk umfaßt, das durch Unterbrechung der Versorgung der Turbine (2) des Turboverdichters des TL-Triebwerks als Ramjet funktionieren kann, so daß der Verdichter (1) durch Autorotation frei drehen kann.

6. Kombinationstriebwerk nach einem der Ansprüche 1 bis 5, dadurch gekennzeichnet, daß es Modulationsvorrichtungen für die Durchsatzleistung des Raketentriebwerks umfaßt, um den Querschnitt im Hals (50) der Außendüse (5) des aeroben Stroms den Bedingungen der anaeroben Verbrennung (7) anzupassen, die in Höhe des Halses (50) der Außendüse (5) des aeroben Stroms einen vorbestimmten Querschnitt einnimmt, der den aus der aeroben Brennkammer (4) kommenden Gasen nur den Querschnitt läßt, den sie in Abhängigkeit von den externen Betriebsbedingungen des Triebwerks unbedingt benötigen, sowie dadurch, daß die Modulationsvorrichtungen für die Durchsatzleistung des Raketentriebwerks Vorrichtungen für die Veränderung der Durchsatzleistung oder des Drucks jedes Gasstroms, der eine Turbopumpe antreibt, umfasssen.

7. Kombinationstriebwerk nach einem der Ansprüche 1 bis 5, dadurch gekennzeichnet, daß die aerobe Außendüse (5) axial in einem Bereich verstellbar ist, der bei allein anaerobem Betrieb zuläßt, daß der aus der anaeroben Brennkammer (7) kommende Gasstrahl tangential auf die Wand der Außendüse (5) trifft, wodurch kritische Lastpunkte und Stoßwellen vermieden werden.

8. Kombinationstriebwerk nach einem der Ansprüche 1 bis 5, dadurch gekennzeichnet, daß die aerobe Düse (5) axial in einem Bereich verstellbar ist, der bei allein anaerobem Betrieb ein Sperren des aeroben Stroms ermöglicht, damit Rezirkulationen der Heißgase in der aeroben Brennkammer (4) vermieden werden.

9. Kombinationstriebwerk nach einem der Ansprüche 1 bis 5, dadurch gekennzeichnet, daß es einen Kranz beweglicher Ventile (14) aufweist, die flatternd am Ausgang der ringförmigen Kammer (7) des Raketentriebwerks angeordnet sind, umd diese während des alleinigen Betriebs des Strahltriebwerks zu verschließen, während bei Kombinationsbetrieb oder allein anaerobem Betrieb die Öffnung der Ventile durch den Druckunterschied zwischen den Innen- und Außenflächen der Ventile (14) erfolgt.

10. Kombinationstriebwerk nach Anspruch 9, dadurch gekennzeichnet, daß es außerdem eine Dämpfungsvorrichtung umfaßt, die mit den Flatterventilen (14) verbunden ist, um Erschütterungen zu vermeiden, sowie kleine Zylinder (15), um die Schließung der Ventile (14) beim Abschalten des Triebwerks zu gewährleisten.

11. Kombinationstriebwerk nach einem der Ansprüche 1 bis 5, dadurch gekennzeichnet, daß es einen Kranz beweglicher Ventile (14) umfaßt, die von Zylindern (15) betätigt werden und am Ausgang der ringförmigen Kammer (7) des Raketentriebwerks montiert sind, um diese bei einem alleinigen Betrieb des Strahltriebwerks zu verschlieißen, um Rezirkulationen der aus dem aeroben Strom kommenden Heißgase zu verhindern, und um bei Kombinationsbetrieb in einer Zwischenöfffnungsposition zu stehen, um die Wechselwirkungen zwischen aerobem und anaerobem Strom zu minimieren und dazu beizutragen, den vom aeroben Strom durchzogenen Querschnitt im Hals (50) der Außendüse (5) anzupassen.

12. Kombinationstriebwerk nach Anspruch 11, dadurch gekennzeichnet, daß die Ventile (14) im alleinigen Raketentriebwerksbetrieb in komplette Öffnungsposition gebracht werden, um die vom aeroben Strom durchzogene aerobe Brennkammer (4) zu verschließen, um dort Rezirkulationen der Heißgase zu verhindern.

13. Kombinationstriebwerk nach einem der Ansprüche 1 bis 5, dadurch gekennzeichnet, daß es im Alleinbetrieb des Raketentriebwerks Vorrichtungen umfaßt, um den aeroben Strom, der die aerobe Brennkammer (4) durchströmt, mit Hilfe eines Gasstroms niedriger Temperatur zum Kühlen des Auftreffbereichs des sich ausdehnenden, aus der Brennkammer (7) des Raketentriebwerks kommenden Strahls auf der Wand der aeroben Außendüse (7) zu spülen und das Führen dieses Strahls auf diese Wand zu erleichtern.

14. Kombinationstriebwerk nach Anspruch 13, dadurch gekennzeichnet, daß die Vorrichtungen zum Erhalten eines Gasspülstroms niedriger Temperatur das Einspritzen in den aeroben Strom einer Brennstoffmenge umfassen, die ggfs. teilweise im Raketentriebwerk aufgeheizt wird.

15. Kombinationstriebwerk nach Anspruch 13, dadurch gekennzeichnet, daß die Vorrichtungen zum Erhalten eines Gasspülstroms niedriger Temperatur das Einspritzen in den aeroben Strom der aus den Turbinen der Turbopumpen des Raketentriebwerks kommenden Gase umfassen.

16. Kombinationstriebwerk nach einem der Anspruche 1 bis 5, dadurch gekennzeichnet, daß es im allein aeroben Betrieb Vorrichtungen zum Spülen der Brennkammer (7) des Raketentriebwerks mit einem Gasstrom niedriger Temperatur umfaßt, damit Rezirkulationen der aus dem aeroben Strom stammenden Heißgase vermieden werden.

17. Kombinationstriebwerk nach einem der Ansprüche 1 bis 5, dadurch gekennzeichnet, daß der erhabene Mittelkörper mit herausstehender Spitze (8), der die ringförmige Brennkammer (7) des Raketentriebwerks begrenzt, eine leicht stumpfe Form aufweist und daß ein Kühlkreislauf (80) im erhabenen Mittelkörper (8) vorgesehen ist.

18. Kombinationstriebwerk nach Anspruch 17, dadurch gekennzeichnet, daß der abgestumpfte Teil des Mittelkörpers (8), der die ringförmige Brennkammer (7) des Raketentriebwerks begrenzt, eine Düse (17) zum Ausstoßen von Gasströmen aufweist, die festgehalten oder verloren sind und in einer axialen Leitung (18) gesammelt werden, die den Mittelkörper (10) durchzieht, der die aerobe Brennkammer (4) begrenzt, sowie durch den Mittelkörper (8), der die ringförmige Brennkammer (7) des Raketentriebwerks begrenzt.

19. Kombinationstriebwerk nach einem der Ansprüche 1 bis 5, dadurch gekennzeichnet, daß der erhabene Mittelkörper mit herausragender Spitze (8), der die ringförmige Brennkammer (7) des Raketentriebwerks begrenzt, mindestens teilweise mit Hilfe von thermostrukturellen Verbundmaterialien hergestellt ist.

20. Kombinationstriebwerk nach einem der Ansprüche 1 bis 5, dadurch gekennzeichnet, daß die ringförmige Brennkammer (7) des Raketentriebwerks aus mehreren Segmenten besteht.

21. Kombinationstriebwerk nach Anspruch 20, dadurch gekennzeichnet, daß die ringförmige Brennkammer (7) aus mehreren einzelnen Kammern (21) mit kreisbogenförmigem Querschnitt besteht, die aneinandergrenzend im Kreis um die Achse des Mittelkörpers angeordnet sind.

22. Kombinationstriebwerk nach Anspruch 20, dadurch gekennzeichnet, daß die ringförmige Brennkammer (7) aus mehreren einzelnen Kammern (22) mit ellipsenförmigem Querschnitt besteht, die aneinandergrenzend im Kreis um die Achse des Mittelkörpers angeordnet sind.

23. Kombinationstriebwerk nach Anspruch 20, dadurch gekennzeichnet, daß die ringförmige Brennkammer (7) aus mehreren einzelnen Kammern (23) mit kreisförmigem Querschnitt besteht , die aneinandergrenzend im Kreis um die Achse des Mittelkörpers angeordnet sind.

24. Kombinationstriebwerk nach einem der Ansprüche 20 bis 23, dadurch gekennzeichnet, daß die einzelnen Kammern der segmentierten, ringförmigen Brennkammer (7) einzeln und selektiv gesteuert werden, so daß in bestimmten Flugphasen nur ein Teil der einzelnen Kammern der segmentierten, ringförmigen Brennkammer (7) in Betrieb ist.

25. Kombinationstriebwerk nach einem der Ansprüche 1 bis 5, dadurch gekennzeichnet, daß der Verdichter (1) Leitschaufeln mit variabler Einstellung sowie veränderbare Funktionsparameter aufweist.

26. Kombinationstriebwerk nach einem der Ansprüche 1 bis 5, dadurch gekennzeichnet, daß der Verdichter (1) Gegenlaufrotoren aufweist.

27. Kombinationstriebwerk nach einem der Ansprüche 1 bis 5, dadurch gekennzeichnet, daß es eine ausklappbare Expansionsdüse (9) umfaßt, die an die aerobe Außendüse (5) angeschlossen und mit Steuervorrichtungen (13) zum Ausklappen der ausklappbaren Expansionsdüse (9) ausgestattet ist.

28. Kombinationstriebwerk nach einem der Ansprüche 1 bis 27, dadurch gekennzeichnet, daß die ringförmige Brennkammer (7) des anaeroben Raketentriebwerks von einer ersten kegelstumpfförmigen Außenwand (71) und einer zweiten kegelstumpfförmigen Innenwand (72) begrenzt wird, die koaxial angeordnet sind und eine ringförmige Kammer (7) bilden, deren hinterer Teil weiter von der Triebwerksachse entfernt liegt als der vordere Teil, wobei sich die erste kegelstumpfförmige Außenwand (71) tangential an ihrem hinteren Teil durch einen Wandteil (73) verlängert, der die Außenwand der Düse (70) des Raketentriebwerks bildet und eine auf das Innere der Düse (70) gerichtete Konkavität aufweist, sowie dadurch, daß sich die zweite kegelstumpfförmige Innenwand (71) an ihrem hinteren Teil durch einen Wandteil (74) verlängert, der zum Inneren der ringförmigen Kammer (7) hervorsteht und die Innenwand der Düse (70) des Raketentriebwerks bildet und eine in das Innere der Düse (70) weisende Wölbung aufweist.

29. Kombinationstriebwerk nach Anspruch 28, dadurch gekennzeichnet, daß der erhabene Mittelkörper (8), der den Mittelkörper (10) der aeroben Brennkammer (4) verlängert, indem er einen Zapfen bildet, diese zweite kegelstumpfförmige Innenwand (72) umfaßt, wobei der besagte hervorstehende Wandteil (74) die Innenwand der Düse (70) des Raketentriebwerks bildet, sowie eine gebogene Wand (82) in Kegelform, die eine nach außen gerichtete Konkavität aufweist und in Höhe des Halses (50) der aeroben Außendüse (5) liegt.

30. Kombinationstriebwerk nach Anspruch 28 oder 29, dadurch gekennzeichnet, daß der Mittelkörper (10) der aeroben Brennkammer (4) an seinem unteren Teil mit einem Teil abschließt, der zur Achse des Triebwerks umgebogen ist und mit dem freien unteren Ende des Wandteils (73), der die Außenwand der Düse (70) des Raketentriebwerks bildet, verbunden ist.

## Claims

1. Highly adaptable combined propulsion engine for an aircraft or a space-going airplane, comprising a jet engine for operating in air-breathing manner in the atmosphere and a rocket engine having liquid or gaseous propellants for operating in non-air-breathing manner in space, the jet engine comprising an air inlet device (16) and an external nozzle (5) which, in association with a central body (10), defines an air-breathing combustion chamber (4) having an air-breathing stream of combustion gases passing therethrough, and the rocket engine comprising a non-air-breathing annular combustion chamber (7) and at least one turbo pump (2) for feeding the annular combustion chamber with propellant,
characterized in that the annular combustion chamber (7) of the rocket engine is disposed inside the central body (10) of the jet engine, is situated in the portion downstream from the air-breathing combustion chamber (4) in the rear portion of the central body (10), and is itself delimited by a streamlined central body portion (8) extending the central body (10) of the air-breathing combustion chamber (4) to constitute a spike which penetrates into the throat (50) of the external nozzle (5) while ensuring aerodynamic continuity of the stream of combustion gases from the air-breathing combustion chamber (4), and in that means (6) are provided for modifying the axial position of the external nozzle (5) of the jet engine in order to adapt the flow section for the stream of combustion gases from the air-breathing combustion chamber (4) through the throat (50) of said nozzle (5) to different internal and external operating conditions of the engine, the air-breathing jet engine and the non-air-breathing rocket engine being capable of operating alternately or simultaneously in combined operation, in different stages of flight.

2. Combined propulsion engine according to claim 1, characterized in that the jet engine comprises a turbo jet.

3. Combined propulsion engine according to claim 1, characterized in that the jet engine comprises a turbo rocket constituted by a turbo jet whose turbine (2) is powered by a separate non-air-breathing gas generator (11).

4. Combined propulsion engine according to claim 1, characterized in that the jet engine comprises a ram jet.

5. Combined propulsion engine according to claim 2 or claim 3, characterized in that it includes a turbo jet capable of operating as a ram jet by cutting off the power supply to the turbine (2) of the turbo jet's turbo compressor, such that the compressor (1) is left free to rotate under drive from the incoming air.

6. Combined propulsion engine according to any one of claims 1 to 5, characterized in that it includes means for modulating the flow rate through the rocket engine so as to adapt the flow section for the air-breathing stream through the throat (50) of the external nozzle (5) to the conditions of non-air-breathing combustion (7) occupying a predetermined section in the throat (50) of the external nozzle (5) of the air-breathing stream, so as to permit the gases from the air-breathing combustion chamber (4) to occupy only that section which is strictly necessary as a function of operating conditions external to the engine, and in that said means for modulating the flow rate of the rocket engine include means for modifying the flow rate or the pressure of each gas flow driving a turbo pump.

7. Combined propulsion engine according to any one of claims 1 to 5, characterized in that the external air-breathing nozzle (5) is axially adjustable over a range enabling the non-air-breathing mode of operation on its own to cause the jet of gases from the non-air-breathing combustion chamber (7) to reach the wall of the external nozzle (5) tangentially, thereby preventing the appearance of hot points and of shock waves.

8. Combined propulsion engine according to any one of claims 1 to 5, characterized in that the air-breathing nozzle (5) is axially adjustable over a range enabling the air-breathing stream to be closed off during non-air-breathing operation mode on its own, thereby preventing hot gases from flowing back into the air-breathing combustion chamber (4).

9. Combined propulsion engine according to any one of claims 1 to 5, characterized in that it includes a ring of moving flaps (14) loosely mounted at the outlet from the annular chamber (7) of the rocket engine in order to close off the rocket engine during jet engine operation on its own, whereas during combined operation or during non-air-breathing operation on its own the flaps are opened by the pressure difference between the inner and outer faces of the flaps (14).

10. Combined propulsion engine according to claim 9, characterized in that it further includes a shock absorber device associated with the loosely mounted flaps 14 to prevent vibrations, together with small actuators (15) to close the flaps (14) when the engine is stopped.

11. Combined propulsion engine according to any one of claims 1 to 5, characterized in that it includes a ring of moving flaps (14) actuated by actuators (15) and mounted at the outlet from the annular chamber (7) of the rocket engine to close said outlet during jet engine operation on its own, thereby preventing hot gases from flowing back from the air-breathing stream and to enable the flaps to be disposed in intermediate open positions when operating in combined mode in order to minimize interactions between the air-breathing flow and the non-air-breathing flow, thereby contributing to adapting the section of the throat of the external nozzle through which the air-breathing stream flows.

12. Combined propulsion engine according to claim 11, characterized in that in rocket engine only operating mode, the flaps (14) are put in the fully open position in order to close off the air-breathing combustion chamber (14) through which the air-breathing stream flows, thereby avoiding hot gas backflow.

13. Combined propulsion engine according to any one of claims 1 to 5, characterized in that it includes means for sweeping the air-breathing stream running through the air-breathing combustion chamber (4) while operating rocket engine only mode with a flow of low temperature gas in order to cool the zone of impact of the expanding jet leaving the combustion chamber (7) of the rocket engine on the wall of the external air-breathing nozzle (5), and in order to facilitate adhesion of said jet on said wall.

14. Combined propulsion engine according to claim 13, characterized in that the means for obtaining a low temperature sweeping gas flow comprise means for injecting a flow of fuel into the air-breathing stream, which fuel may optionally be partially heated by the rocket engine.

15. Combined propulsion engine according to claim 13, characterized in that the means for obtaining a low temperature sweeping gas flow comprise means for injecting gases that come from the turbines of the turbo pumps of the rocket engine into the air-breathing stream.

16. Combined propulsion engine according to any of claims 1 to 5, characterized in that it includes means for use in air-breathing only operation mode to sweep the combustion chamber (7) of the rocket engine with a low temperature gas flow in order to prevent backflow of hot gases from the air-breathing stream.

17. Combined propulsion engine according to any of claims 1 to 5, characterized in that the streamlined central body with a projecting tip (8) delimiting the annular combustion chamber (7) of the rocket engine is slightly truncated, and in that a cooling circuit (80) is disposed inside said streamlined central body (8).

18. Combined propulsion engine according to claim 17, characterized in that the truncated portion of the central body (8) delimitng the annular combustion chamber (7) of the rocket engine includes a nozzle (17) for ejecting flows of trapped or spent gases collected in an axial duct (18) passing through the central body (10) delimiting the air-breathing combustion chamber (4) and the central body (8) delimiting the annular combustion chamber (7) of the rocket engine.

19. Combined propulsion engine according to any one of claims 1 to 5, characterized in that the streamlined central body having a projecting tip (8) delimiting the annular combustion chamber (7) of the rocket engine is made, at least in part, from thermostructural composite materials.

20. Combined propulsion engine according to any one of claims 1 to 5, characterized in that the annular combustion chamber (7) of the rocket engine is made up of a plurality of segments.

21. Combined propulsion engine according to claim 20, characterized in that the annular combustion chamber (7) is constituted by a plurality of individual chambers (21) each having a section in the form of a circular arc, said individual chambers being disposed contiguously in a ring around the axis of the central body.

22. Combined propulsion engine according to claim 20, characterized in that the annular combustion chamber (7) is constituted by a plurality of individual chambers (22) each elliptical in section, which chambers are disposed contiguously in a ring around the axis of the central body.

23. Combined propulsion engine according to claim 20, characterized in that the annular combustion chamber (7) is constituted by a plurality of individual chambers (22) each circular in section, which chambers are disposed contiguously in a ring around the axis of the central body.

24. Combined propulsion engine according to any one of claims 20 to 23, characterized in that the individual chambers of the segmented annular combustion chamber (7) are selectively and individually controlled so that during certain stages of flight, only a fraction of the individual chambers of the segmented annular combustion chamber (7) is in operation.

25. Combined propulsion engine according to any one of claims 1 to 5, characterized in that the compressor (1) includes variable pitch blades and has operating parameters that are modifiable depending on flight stages.

26. Combined propulsion engine according to any one of claims 1 to 5, characterized in that the compressor (1) has contrarotating rotors.

27. Combined propulsion engine according to any one of claims 1 to 5, characterized in that it includes a deployable diverging portion (9) connected to the air-breathing external nozzle (5) and provided with means (13) for controlling deployment of the deployable diverging portion (9).

28. Combined propulsion engine according to any one of claims 1 to 27, characterized in that the annular combustion chamber (7) of the non-air-breathing rocket engine is delimited by an outer first frustoconical wall (71) and by an inner second frustoconical wall (72), said wall being coaxial and defining an annular chamber (7) having a downstream portion which is further from the axis of the engine than its upstream portion, in that the outer first frustoconical wall (71) extends tangentially at its downstream portion in the form of a wall portion (73) forming the outer wall of the rocket engine nozzle (70) and being concave towards the inside of the nozzle (70), and in that the inner second frustoconical wall (72) extends at its downstream portion in the form of a wall portion (74) projecting towards the inside of the annular chamber (7) and forming the inner wall of the rocket engine nozzle (70) presenting a convex face towards the inside of the nozzle (70).

29. Combined propulsion engine according to claim 28, characterized in that the tapering central body (8) extending the central body (10) of the air-breathing combustion chamber (4) and constituting a spike comprises said inner second frustoconical wall (72), said projecting wall portion constituting the inner wall of the rocket engine nozzle (70) and a tip-forming curved wall (82) having a concave face facing outwards and situated in the throat (50) of the outer air-breathing nozzle (5).

30. Combined propulsion engine according to claim 28 or claim 29, characterized in that the central body (10) of the air-breathing combustion chamber (4) terminates at its downstream end in a portion curving towards the axis of the engine and connected to the free downstream end of the wall portion (73) constituting the outer wall of the rocket engine nozzle (70).
